(19) Europäisches Patentamt / European Patent Office / Office européen des brevets

(11) **EP 3 093 910 B1**

(12) **EUROPEAN PATENT SPECIFICATION**

(45) Date of publication and mention
of the grant of the patent:
**19.06.2019  Bulletin 2019/25**

(21) Application number: **15735193.3**

(22) Date of filing: **09.01.2015**

(51) Int Cl.:
*H01M 4/587* (2010.01)        *H01M 4/36* (2006.01)
*H01M 4/38* (2006.01)         *H01M 4/48* (2010.01)
*H01M 4/62* (2006.01)         *H01M 4/04* (2006.01)
*H01M 4/133* (2010.01)        *H01M 4/1393* (2010.01)
*H01M 10/052* (2010.01)

(86) International application number:
**PCT/JP2015/050444**

(87) International publication number:
**WO 2015/105167 (16.07.2015 Gazette 2015/28)**

(54) **NEGATIVE ELECTRODE ACTIVE MATERIAL FOR LITHIUM-ION SECONDARY CELL**

NEGATIVELEKTRODEN-AKTIVMATERIAL FÜR LITHIUM-IONEN-SEKUNDÄRBATTERIE

MATÉRIAU ACTIF D'ÉLECTRODE NÉGATIVE POUR CELLULE SECONDAIRE LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **09.01.2014  JP 2014002175**

(43) Date of publication of application:
**16.11.2016  Bulletin 2016/46**

(73) Proprietors:
  • **Showa Denko K.K.
    Tokyo 105-8518 (JP)**
  • **Umicore
    1000 Brussels (BE)**

(72) Inventor: **MIYAMOTO, Daisuke
Tokyo 105-8518 (JP)**

(74) Representative: **Strehl Schübel-Hopf & Partner
Maximilianstrasse 54
80538 München (DE)**

(56) References cited:
  WO-A1-2013/114094        WO-A1-2014/003135
  WO-A2-2004/049473        JP-A- 2005 019 399
  JP-A- 2005 310 760       JP-A- 2012 084 519
  JP-A- 2013 534 899       US-A1- 2008 145 757

**Description**

TECHNICAL FIELD

The present invention relates to a manufacturing method of a negative electrode active material for lithium ion secondary battery. In more detail, the present invention relates to a manufacturing method of a negative electrode active material that can give a lithium ion secondary battery having high initial capacity and high capacity retention ratio.

BACKGROUND ART

A lithium ion secondary battery is used as a power supply for an electronic device and the like. As a negative electrode material for a lithium ion secondary battery, graphite is usually employed. A theoretical capacity of the graphite is 372 mAh/g. Since Si and Sn have a theoretical capacity higher than that of the graphite, if Si or Sn can be used as a negative electrode material, a lithium ion secondary battery having a high capacity can be provided. However, since particles comprising Si or Sn have intrinsically low conductivity and a large volume change accompanying intercalation and deintercalation of lithium ions, the particles collapse and disrupt a conductive path to result in an increase in the internal resistance.

Here, materials obtained by complexing Si particles and a carbon material have been variously suggested. Patent Document 1 discloses a composite material comprising a combination of a metallic substance, a graphitic material and amorphous carbon. Patent Document 2 discloses a composite material comprising a composite composed of a material comprising a Si element and a conductive material and a carbon coated on the composite wherein the composite material has a void inside thereof. Patent Document 3 discloses a covered composite material in which a fibrous graphitic carbon material get entangled with Si particles and sandwiches the Si particles and an outer surface of a composite material having a porous structure is covered with a carbonaceous carbon material.

CITATION LIST

PATENT LITERATURE

Patent Document 1 : JP 3369589 B
Patent Document 2 : JP 3897709 B
Patent Document 3 : JP 4809617 B

SUMMARY OF THE INVENTION

PROBLEMS TO BE RESOLVED BY THE INVENTION

The composite materials described in Patent Documents 1 to 3 can reduce the electric resistance of an electrode for a lithium ion secondary battery more than in the case where the Si particles without change are used as a negative electrode material. However, the initial capacity and the capacity retention ratio still remain low. In particular, the composite materials described in Patent Document 2 or 3 have low electrode density because of the voids.

An object of the present invention is to provide a negative electrode active material that can give a lithium ion secondary battery having high initial capacity and capacity retention ratio.

MEANS FOR SOLVING THE PROBLEMS

As a result of study for achieving the above object, the present invention has been achieved which relates to a method according to claim 1 for manufacturing of a negative electrode active material for a lithium ion battery.

[1] The negative electrode active material for a lithium ion secondary battery, the negative electrode active material comprising a graphitic carbon material (A), a composite material (B), and a carbonaceous carbon material (C), wherein

the graphitic carbon material (A) is formed of scale-like particles,
in which a ratio $I_G/I_D$ (G value) of an area ($I_G$) of a peak in the range of 1580 to 1620 cm$^{-1}$ to an area ($I_D$) of a peak in the range of 1300 to 1400 cm$^{-1}$ in a Raman spectroscopic spectrum observed when an edge surface of the particle is measured with a Raman microspectrometer is not less than 5.2 and not more than 100, and an average interplanar

spacing ($d_{002}$) of a (002) plane of the particle by X-ray diffraction method is not more than 0.337 nm; and

relationships of $1.5 \leqq A_{op} \leqq 6$ and $0.2 \times D_{50} \leqq (S_{op} \times A_{op})^{1/2} < 2 \times D_{50}$ is satisfied,

in which, by observing optical structures in a rectangular visual field of 480 $\mu$m $\times$ 540 $\mu$m of a cross-section of a formed body composed of the graphitic carbon material (A) by a polarizing microscope, $S_{op}$ [$\mu$m$^2$] is an area of an optical structure when an area cumulated from a smaller area side in an area frequency distribution of the optical structure is 60 % of a total area of the optical structure; $A_{op}$ is an aspect ratio of the optical structure when a frequency cumulated from a smaller aspect ratio side in an aspect ratio frequency distribution of the optical structure is 60% of a total frequency of the aspect ratio; and $D_{50}$ [$\mu$m] is a 50% diameter in a cumulative particle size distribution on the volume basis of the graphitic carbon material (A) measured by a laser diffraction method, and the optical structure of the carbon material is almost in a belt shape; the composite material (B) comprises carbon nanotubes (b1) and silicon-containing particles (b2), the silicon-containing particles (b2) being dispersedly disposed in the inside of a floc of the carbon nanotubes (b1), the carbon nanotubes (b1) having an aspect ratio of 100 to 1000, the silicon-containing particles (b2) comprising a surface layer composed of $SiO_x$ ($0 < x \leqq 2$), and the silicon-containing particles (b2) having an oxygen content of not less than 1 % by mass and not more than 18 % by mass and being not less than 90% by number in a proportion of the silicon-containing particles (b2) having a primary particle size of not more than 200 nm relative to the total number of the silicon-containing particles (b2), and the carbonaceous carbon material (C) covers at least a part of a surface of the silicon-containing particles (b2).

[2] The negative electrode active material for lithium ion secondary batteries according to the item [1], wherein a content of the graphitic carbon material (A) is 20 to 96 % by mass, a content of the carbon nanotubes (b1) is 1 to 20 % by mass, a content of the silicon-containing particles (b2) is 1 to 20 % by mass, and a content of the carbonaceous carbon material (C) is 2 to 40 % by mass, relative to a total mass of the constituents (A), (b1), (b2) and (C).

[3] The manufacturing method of the negative electrode active material for lithium ion secondary batteries according to the item [1] or [2], comprises the steps of

mixing the silicon-containing particles (b2) and a carbon precursor (c) to obtain precursor-coated silicon-containing particles,

subjecting the precursor-coated silicon-containing particles to a heat treatment at a temperature equal to or higher than a softening temperature of the carbon precursor (c),

disintegrating the heat-treated precursor-coated silicon-containing particles,

complexing the disintegrated precursor-coated silicon-containing particles and the carbon nanotubes (b1) to obtain a composite material (B),

pulverizing the composite material (B),

mixing the pulverized composite material (B) and the graphitic carbon material (A) to obtain a mixture, and subjecting the mixture to a heat treatment at a temperature equal to or higher than a carbonizing temperature of the carbon precursor (c).

[4] A lithium ion secondary battery comprising the negative electrode active material for lithium ion secondary battery according to the item [1] or [2].

## ADVANTAGEOUS EFFECTS OF THE INVENTION

A negative electrode active material for lithium ion secondary batteries obtained by the method of the present invention can provide a lithium ion secondary battery in which electric resistance of an electrode is largely reduced, and initial capacity and capacity retention ratio are largely improved.

The reason why such advantageous effects can be obtained according to the present invention is not clear. However, it is assumed that a conductive network formed of the carbonaceous carbon material (C) coated on a surface of the silicon-containing particles (b2) and the carbon nanotubes (b1) that come into contact with the carbonaceous carbon material (C) due to complexing reduces a volume change accompanying intercalation and deintercalation of the lithium ions in the silicon-containing particles (b2) and suppresses the conductive path from collapsing.

## BRIEF DESCRIPTION OF THE DRAWINGS

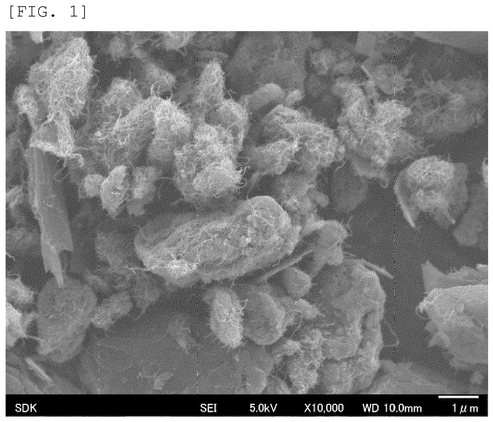

[Fig. 1] a diagram that shows a scanning electron microscope photograph of a negative electrode active material manufactured in Example 1.

## EMBODIMENTS FOR CARRYING OUT THE INVENTION

A negative electrode active material for lithium ion secondary battery according to one embodiment of the method of the present invention comprises a graphitic carbon material (A), a composite material (B), and a carbonaceous carbon material (C).

"Graphitic Carbon Material (A)"

The graphitic carbon material (A) used in one embodiment of the present invention is a carbon material having a significantly high crystal of carbon atoms. The graphitic carbon material is usually more slippery, softer, and weaker to scratching compared to the carbonaceous carbon material. Accompanying the pressing during electrode manufacture, the graphitic carbon material (A) flexibly moves and contributes to improve an electrode density. Examples of the graphitic carbon materials include artificial graphite, natural graphite, and the like.

The graphitic carbon material (A) is formed of scale-like particles. The graphitic carbon material (A) has a 50% diameter ($D_{50}$) in a cumulative particle size distribution on the volume basis of preferably not less than 1 $\mu$m and not more than 50 $\mu$m, more preferably not less than 5 $\mu$m and not more than 35 $\mu$m, and still more preferably not less than 10 $\mu$m and not more than 25 $\mu$m. When the 50% diameter is not less than 1 $\mu$m, a side reaction is difficult to occur during charge/discharge, and when the 50% diameter is not more than 50 $\mu$m, the lithium ions diffuse faster in the negative electrode and a charge/discharge speed tends to increase. In the case of applications for a driving power source of an automobile or the like that demands a large current generation, the 50% diameter is preferably not more than 25 $\mu$m. The 50% diameter ($D_{50}$) is measured using a laser diffraction particle distribution analyzer, for example, Mastersizer (registered trademark) manufactured by Malvern Instruments or the like.

The graphitic carbon material (A) used in one embodiment of the present invention has the G value of not less than 5.2 and not more than 100, preferably not less than 7.0 and not more than 80, and more preferably not less than 10 and not more than 60. The G value is a ratio $I_G/I_D$ of an area ($I_G$) of a peak in the range of 1580 to 1620 cm$^{-1}$ to an area ($I_D$) of a peak in the range of 1300 to 1400 cm$^{-1}$ in a Raman spectroscopic spectrum observed when an edge surface of a particle is measured with a Raman microspectrophotometer. The G value within the above range prevents the battery from self-discharge and degradation. When the G value is excessively small, a side reaction tends to occur during charge/discharge due to presence of many defects.

A Raman spectroscopic spectrum of an edge surface of a particle can be measured by selectively observing a part that is not a smooth part (basal surface) but is an edge surface using, for example, a laser Raman spectrophotometer (NRS-5100, manufactured by JASCO Corporation) and an auxiliary microscope. In the Raman spectroscopic spectrum of the edge surface of a particle, a peak in the range of 1300 to 1400 cm$^{-1}$ is a peak derived from a sp3 bond, and a peak in the range of 1580 to 1620 cm$^{-1}$ is a peak derived from a sp2 bond. The larger the G value is, it indicates that a proportion of the sp2 bond is larger.

The graphitic carbon material (A) used in one embodiment of the present invention has an average interplanar spacing ($d_{002}$) of a (002) plane measured by X-ray diffraction method of 0.337 nm or less. The smaller the $d_{002}$ is, the larger the amount of intercalation and deintercalation per mass of lithium ions is. This contributes to improve a weight energy density. When the $d_{002}$ is 0.337 nm or less, a large part of the optical structures observed by a polarizing microscope are optical anisotropic structures.

Further, the graphitic carbon material (A) used in the present invention has a thickness (Lc) in a c-axis direction of crystal measured by an x-ray diffraction method of preferably not less than 50 nm and not more than 1000 nm from the viewpoint of the weight energy density or the crushability.

The $d_{002}$ and Lc can be measured using powder x-ray diffraction (XRD) method (see Inayoshi Noda, Michio Inagaki, Japan Society for the Promotion of Science, 117th Committee materials, 117-71-A- 1 (1963), Inagaki Michio and others, Japan Society for the Promotion of Science, 117th Committee materials, 117-121-C-5 (1972), and Michio Inagaki, "Carbon", 1963, No.36, pp. 25-34).

The graphitic carbon material (A) used in one embodiment of the present invention has the aspect ratio $A_{op}$ of the optical structure of not less than 1.5 and not more than 6, and preferably not less than 2.0 and not more than 4.0. When the aspect ratio $A_{op}$ is equal to or larger than the lower limit value, the optical structures tend to slip therebetween and the electrode density can be readily increased. When the aspect ratio $A_{op}$ is equal to or smaller than the upper limit value, an energy required for synthesis of a raw material can be reduced.

The graphitic carbon material (A) used in one embodiment of the present invention has a ratio of an equivalent longer diameter $D_L$ [$\mu$m] of the optical structure to the 50% diameter $D_{50}$ [$\mu$m] of not less than 0.2, preferably not less than 0.25, more preferably not less than 0.28, and still more preferably not less than 0.35. Further, the ratio of the equivalent longer diameter $D_L$ [$\mu$m] to the 50% diameter $D_{50}$ [$\mu$m] is less than 2, and preferably not more than 1. The larger the equivalent longer diameter $D_L$ of the optical structure is, the larger the amount of retained lithium ions tends to increase. The equivalent longer diameter $D_L$ of the optical structure is a value defined by $(S_{op} \times A_{op})^{1/2}$. A number ratio of the optical structure in the graphitic carbon material can be represented by a ratio ($D_L/D_{50}$) of the equivalent longer diameter $D_L$ (= $(S_{op} \times A_{op})^{1/2}$) to the 50% diameter $D_{50}$. When the $D_L/D_{50}$ is small, it indicates that there are many optical structures in the graphitic carbon material. Incidentally, an equivalent shortest diameter Ds of the optical structure can be represented by $D_L/A_{op}$.

The $A_{op}$ is an aspect ratio of the optical structure when a frequency cumulated from a smaller aspect ratio side in an aspect ratio frequency distribution of the optical structure is 60 % to a total frequency of the aspect ratio.

The $S_{op}$ is an area [$\mu m^2$] of the optical structure when an area cumulated from a smaller area side in an area frequency distribution of the optical structure is 60 % to a total area of the optical structure.

The $D_{50}$ is a 50% diameter [$\mu m$] in a cumulative particle size distribution based on the volume of the graphitic carbon material (A) measured by a laser diffraction method.

The above optical structure is observed in a rectangular field of sight of 480 $\mu m$ × 540 $\mu m$ of a cross section of a formed body composed of the graphitic carbon material (A) by a polarizing microscope. The optical structure in the carbon material is almost in a belt shape. In a cross section of a formed body composed of the carbon material, generally rectangular optical structures are observed. An observation method with a polarizing microscope can be conducted by reference to the method described in, for example, "Modern Carbon Material Experimental Technology (Analysis part)" edited by The Carbon Society of Japan (2001), published by Sipec Co., Ltd., pages 1 to 8, and the like.

In the present invention, preparation of a cross-section of the formed body composed of the graphitic carbon material and the observation of the optical structure are carried out as described below.

An double-sided adhesive tape is adhered to a bottom of a plastic container having an internal volume of 30 $cm^3$, and two spatula full (about 2 g) of sample for observation are placed thereon.

A curing agent (product name: Curing agent (M agent) manufactured by NOF Corporation, sold by Marumoto Struers K.K.) is added to a cold embedding resin (product name: Cold Embedding Resin #105, manufactured by Japan Composite Co., sold by Marumoto Struers K.K.), followed by kneading for 30 seconds. The kneaded product (about 5 ml) is slowly poured into the container to a height of about 1 cm. The kneaded product is left for one day to be solidified. The solidified product is taken out of the container. The double-sided adhesive tape adhered to the bottom surface of the solidified product is peeled off. The bottom surface of the solidified product is polished using a polishing plate rotation type polishing machine at a rotation number of 1000 rpm. The polishing plate is changed in the order of #500, #1000, and #2000 in accordance with the degree of polishing. At the end, mirror polishing is conducted using alumina (product name: Baikalox (registered trademark), type: 0.3 CR, particle size: 0.3 $\mu m$, manufactured by Baikowski, sold by Baikowski Japan.

A polished solidified product is fixed on a mount with clay and a polished surface is observed with a polarizing microscope (BX51, manufactured by OLYMPUS Corporation) at 200-fold magnification. A CAMEDIA C-5050 ZOOM digital camera, manufactured by OLYMPUS Corporation, is connected to the polarizing microscope with an attachment, and an image of the polarizing microscope is taken at a shutter time of 1.6 seconds. An image of 1200 pixels × 1600 pixels is provided for analysis. This corresponds to a visual field of 480 $\mu m$ × 540 $\mu m$. An image analysis is conducted using Image J (manufactured by the National Institutes of Health) and a blue part, a yellow part, a red part and a black part are determined. Parameters of the blue part, yellow part, red part and black part in the Image J are as shown in Table 1.

[Table 1]

Table 1

|  | Hue | Saturation | Brightness |
|---|---|---|---|
| Blue | 150~190 | 0~255 | 80~255 |
| Yellow | 235~255 | 0~255 | 80~255 |
| Red | 193~255 | 180~255 | 120~255 |
| Black | 0~255 | 0~255 | 0~120 |

A statistical processing of detected structures is conducted using an external macro. The black part is omitted from the statistical processing because it corresponds to a resin part. The blue part, the yellow part and the red part are parts corresponding to the optical structure. An area and an aspect ratio of each of the blue part, the yellow part and the red part are measured.

The graphitic carbon material (A) used in the present invention has an intensity ratio of a peak derived from rhombohedral is preferably not more than 5 %, and more preferably not more than 1 %. The intensity ratio (rh [%]) of a peak derived from rhombohedral is calculated by a formula:

$$rh = P_2/(P_1 + P_2) \times 100 \ [\%]$$

based on an intensity ($P_1$) of a peak derived from a (100) plane of a hexagonal structure and an intensity ($P_2$) of a peak

derived from a (101) plane of a rhombohedral structure. When the intensity ratio of a peak derived from rhombohedral is within the above numerical range, this contributes to improve rapid charge/discharge characteristics because an intercalation compound is smoothly formed with lithium ions.

The graphitic carbon material (A) used in one embodiment of the present invention has a BET specific surface area of preferably not less than 0.4 m$^2$/g and not more than 5 m$^2$/g, more preferably not less than 0.5 m$^2$/g and not more than 3.5 m$^2$/g, and still more preferably not less than 0.5 m$^2$/g and not more than 3.0 m$^2$/g. When the BET specific surface area is within the range, without excessively using a binder, a large contact area with an electrolytic solution can be secured, the lithium ions can be smoothly intercalated and deintercalated, and a reaction resistance of a battery can be made smaller. The BET specific surface area is calculated from an adsorption amount of nitrogen gas. Examples of measurement devices include NOVA-1200 manufactured by Yuasa Ionics Co., Ltd., and the like.

The graphitic carbon material (A) used in one embodiment of the present invention has a loose bulk density (zero tapping) of preferably not less than 0.7 g/cm$^3$, a powder density (tap density) at 400 times of tapping of preferably not less than 0.8 g/cm$^3$ and not more than 1.6 g/cm$^3$, more preferably not less than 0.9 g/cm$^3$ and not more than 1.6 g/cm$^3$, and still more preferably not less than 1.1 g/cm$^3$ and not more than 1.6 g/cm$^3$.

The loose bulk density is a density obtained by dropping 100 g of a sample from a height of 20 cm into a measuring cylinder and measuring a volume and a mass without applying a vibration. A tap density is a density obtained by measuring a volume and a mass after 100 g of a powder is tapped 400 times using AUTOTAP manufactured by Quantachrome Instruments. These are measurement methods in accordance with ASTM B527 and JIS K5101-12-2. A dropping height of the AUTOTAP in the tap density measurement was set to 5 mm.

When the loose bulk density is 0.7 g/cm$^3$ or more, upon applying on an electrode, an electrode density before press tends to be increased. From this value, whether an enough electrode density can be obtained by one time of roll press can be estimated. Further, when the tap density is within the above range, it is easy to set the electrode density that is reached during press to a desired value.

The graphitic carbon material (A) used in the present invention is not particularly limited by a manufacturing method. For example, it can be manufactured by reference to a method as described in WO 2014/003135 A.

An amount of the graphitic carbon material (A) is preferably 20 to 96 % by mass, and more preferably 40 to 92 % by mass, relative to a total mass of the constituents (A), (b1), (b2) and (C) of the negative electrode active material of the present invention.

"Composite Material (B)"

The composite material (B) used in the present invention comprises carbon nanotubes (b1) and silicon-containing particles (b2).

The carbon nanotubes (b1) used in the present invention preferably have a graphene surface that spreads substantially parallel to the long axis of a fiber and a cavity in the center part of the fiber. Here, substantially parallel means that a tilt angle of a graphene layer to the fiber long axis is within about ± 15 degree. Cavity parts may be continuous or discontinuous in a longitudinal direction of the fiber. The number of the graphene layers may be one layer or at least two layers. However, it is preferably two layers or more, and more preferably three layers or more from the viewpoint of dispersibility and conductivity-imparting effect.

The more slender the carbon nanotubes are, the higher the conductivity-imparting effect is. From the viewpoint of the conductivity-imparting effect, an average fiber diameter of the carbon nanotubes (b1) is preferably not more than 100 nm, more preferably not more than 50 nm, and still more preferably not more than 20 nm. On the other hand, the thicker the carbon nanotube is, the higher the dispersibility of the carbon nanotube is. From the viewpoint of the dispersibility, the average fiber diameter of the carbon nanotubes (b1) is preferably not less than 2 nm, and more preferably not less than 4 nm. When considering both the dispersibility and conductivity-imparting effects, the average fiber diameter is preferably 2 to 20 nm and most preferably 4 to 20 nm.

The carbon nanotube (b1) is not particularly limited in a ratio ($d_0$/d) of a fiber diameter d and a cavity inner diameter $d_0$. However, the ratio ($d_0$/d) is preferably from 0.1 to 0.9 and more preferably from 0.3 to 0.9.

A fiber length of the carbon nanotube (b1) is not particularly limited. However, when the fiber length is excessively short, the conductivity imparting effect tends to be smaller, and when the fiber length is excessively long, the dispersibility tends to be lower. Therefore, a preferable fiber length is, though depending on the diameter of the fiber, usually from 0.5 μm to 100 μm, preferably from 0.5 μm to 10 μm, and more preferably from 0.5 μm to 5 μm. Further, when the aspect ratio (a ratio of fiber length to fiber diameter) is from 100 to 1000, the silicon-containing particles are likely to be disposed inside of a floc of the carbon nanotubes.

The carbon nanotube itself may be linear or bends windingly. However, the windingly bending carbon nanotube has a high contact efficiency with the silicon-containing particle (b2) and aggregates thereof in the composite material. Therefore, the windingly bending carbon nanotubes are likely to be homogeneously complexed with the silicon-containing particles (b2) even at a small amount. Further, since the windingly bending carbon nanotube has a high following capability to a volume change of the silicon-containing particle (b2), it can be considered that, also during intercalation and deintercalation of the lithium ions, the contact with the silicon-containing particles (b2) and a network between the fibers can be maintained.

The lower limit of the BET specific surface area of the carbon nanotubes (b1) is preferably 20 $m^2/g$, more preferably 30 $m^2/g$, still more preferably 40 $m^2/g$, and particularly preferably 50 $m^2/g$. There is no particular upper limit of the BET specific surface area but it is preferably 400 $m^2/g$, more preferably 350 $m^2/g$, and still more preferably 300 $m^2/g$.

The carbon nanotube (b1) has a R value of preferably not less than 0.1, more preferably 0.2 to 2.0, still more preferably 0.5 to 1.5. The R value is an intensity ratio $I_D/I_G$ of an intensity ($I_D$) of a peak in the range of 1300 to 1400 $cm^{-1}$ to an intensity ($I_G$) of a peak in the range of 1580 to 1620 $cm^{-1}$, which are determined by a Raman spectroscopic spectrum. It shows that the larger the R value is, the lower the crystallinity is.

The carbon nanotubes (b1) have a compression specific resistance of preferably not more than $1.0 \times 10^{-2}$ $\Omega \cdot cm$, and more preferably $1.0 \times 10^{-3}$ $\Omega \cdot cm$ to $9.9 \times 10^{-3}$ $\Omega \cdot cm$ at the density of 1.0 $g/cm^3$.

The carbon nanotubes (b1) used in the present invention are not particularly limited by a manufacturing method thereof. The carbon nanotubes (b1) can be manufactured by the methods as described in, for example, JP 2008-174442 A or the like.

An amount of the carbon nanotubes (b1) is preferably 1 to 20 % by mass, and more preferably 2 to 15% by mass, relative to a total mass of the constituents (A), (b1), (b2) and (C) of the negative electrode active material of the present invention.

The silicon-containing particles (b2) used in one embodiment of the present invention has a superficial layer composed of $SiO_x$ (0 < x $\leqq$ 2). A part other than the superficial layer, that is core, may be composed of elemental silicon, or may be composed of $SiO_x$ (0 < x $\leqq$ 2). An average thickness of the superficial layer is preferably not less than 0.5 nm and not more than 10 nm. When the average thickness of the superficial layer is not less than 0.5 nm, oxidation by air or an oxidizing gas can be suppressed. Further, when the average thickness of the superficial layer is not more than 10 nm, an irreversible capacity during an initial cycle can be prevented from increasing. The average thickness can be measured with a TEM photograph.

The silicon-containing particles (b2) used in the present invention has an oxygen element content of preferably not less than 1 % by mass and not more than 18 % by mass, and more preferably not less than 2 % by mass and not more than 10 % by mass relative to a mass of the particles (b2). The oxygen content can be quantified by, for example, ICP (Inductively Coupled Plasma).

The silicon-containing particles (b2) are not less than 90% by number in a proportion of the silicon-containing particles (b2) having a primary particle size of not more than 200 nm relative to the total number of the silicon-containing particles (b2). The primary particle size can be measured by observing with a microscope such as a SEM or a TEM.

Further, the silicon-containing particles (b2) have a diameter $D_{av}$ defined by the following formula of preferably not less than 30 nm and not more than 150 nm, and more preferably not less than 30 nm and not more than 120 nm.

$$D_{av} = 6/(\rho \times S_{sa})$$

$D_{av}$: a diameter under the assumption that a particle is a dense sphere,
$S_{sa}$: a BET specific surface area ($m^2/g$), and
p: a true density of silicon (2.33 $g/cm^3$ as a theoretical value)

When the diameter $D_{av}$ is within this range, a volume strain accompanying intercalation of Li in a Si crystal phase can be relaxed, and the expansion and contraction accompanying the charge/discharge, which is the largest defect when Si is employed in the negative electrode active material, can be suppressed.

Here, primary particle sizes of the silicon-containing particles (b2) in the composite material (B) can be calculated by an image analysis of an image of spherical particles observed when a superficial coat layer of the composite material is observed with a transmission electron microscope of a magnification of 0.1 million times.

The silicon-containing particles (b2) can contain, other than the silicon, an element M selected from other metal elements and half metal elements (carbon element, and the like) in the particles. Specific examples of the M include nickel, copper, iron, tin, aluminum, cobalt, and the like. A content of the element M is not particularly limited, for example, not more than 1 mol to 1 mol of silicon atoms, as long as a behavior of the silicon is not largely inhibited.

The silicon-containing particles (b2) used in the present invention is not particularly limited by a manufacturing method thereof. The silicon-containing particles (b2) can be manufactured by reference to the method as described in, for example, WO 2012/000858 A.

An amount of the silicon-containing particles (b2) is preferably from 1 to 20 % by mass, and more preferably from 2 to 15 % by mass relative to a total mass of the constituents (A), (b1), (b2) and (C) of the negative electrode active material of the present invention.

When the amount of the silicon-containing particles (b2) is small, an addition of such particles has an insufficient effect on an improvement in a battery capacity. When the amount of the silicon-containing particles (b2) is large, the volume change accompanying the intercalation and deintercalation of the lithium ions is large. Therefore, an amount of the carbon nanotubes (b1) for absorbing the volume change has to be increased. As a result, the negative electrode active material is bulky and the density of the negative electrode decrease.

The composite material (B) used in one embodiment of the present invention is formed of flocs in such a manner that the silicon-containing particles (b2) come into contact with a surface of the carbon nanotubes (b1), and the carbon nanotubes (b1) are entangled and come into contact with each other. Further, in the inside of a floc of the carbon nanotubes (b1), the silicon-containing particles (b2) are dispersedly disposed. The silicon-containing particles (b2) have a surface partly covered with the carbonaceous carbon material (C) described below. Therefore, the silicon-containing particles (b2) may come into contact with a surface of the carbon nanotubes (b1) through the carbonaceous carbon material (C).

"Carbonaceous Carbon Material (C)"

The carbonaceous carbon material (C) used in the present invention is a carbon material having a low grown crystal of carbon atoms. The carbonaceous carbon material (C) can be manufactured by carbonizing, for example, a carbon precursor (c). The carbon precursor (c) is not particularly limited, but preferably includes petroleum-derived substances such as thermal heavy oil, pyrolysis oil, straight asphalt, blown asphalt, tar or petroleum pitch by-produced during the manufacture of ethylene, coal derived substances such as coal tar generated during coal distillation, heavy component of which the low boiling point components were removed by distillation of coal tar, coal tar pitch or the like, particularly preferably petroleum-derived pitch or coal-derived pitch. Pitch is a mixture of a plurality of polycyclic aromatic compounds. When the pitch is used, at a high carbonizing rate, carbonaceous carbon materials with less impurities can be manufactured. Because the pitch has a low oxygen content, when the silicon-containing particles are coated with the carbonaceous carbon material, the silicon-containing particles are not easily oxidized.

The softening temperature of the pitch is preferably not less than 80°C and not more than 300°C. Since the pitch having excessively low softening temperature has a small average molecular weight of the polycyclic aromatic compounds constituting the pitch and contains a large amount of a volatile component, the carbonization rate may be low, the manufacturing cost may increase, further, a carbonaceous carbon material containing many pores and having a large specific surface area may be easily obtained. Since the pitch having excessively high softening temperature has high viscosity, it tends to be difficult to homogeneously mix with the silicon-containing particles. The softening temperature of the pitch can be measured according to Mettler method described in ASTM-D3104-77.

An actual carbon ratio of the pitch is preferably not less than 20 % by mass and not more than 70 % by mass, and more preferably not less than 30 % by mass and not more than 60 % by mass. When the pitch having low actual carbon ratio is used, the manufacture cost may increase, and the carbonaceous carbon material having a large specific surface area can be readily obtained. Since the pitch having a high actual carbon ratio generally has high viscosity, it tends to be difficult to homogeneously mix with the silicon-containing particles.

The actual carbon ratio is determined according to the following method. A solid pitch is pulverized with a mortar or the like, a pulverized product is subjected to a mass thermal analysis under a nitrogen gas flow. A ratio of a mass at 1100 °C relative to a charged mass is defined as an actual carbon ratio. The actual carbon ratio corresponds to a fixed carbon content measured at a carbonizing temperature of 1100°C in JIS K2425.

The pitch used in the present invention has a QI (quinoline-insoluble) content of preferably not more than 10 % by mass more preferably not more than 5 % by mass, and still more preferably not more than 2 % by mass . The QI content of the pitch is a value proportional to an amount of free carbon. When the pitch containing a large amount of free carbon is heated, in the process where mesophase spheres appear, the free carbon attaches to a surface of the spheres to form a three-dimensional network, thus, the spheres are discouraged from growing. Therefore, a mosaic structure tends to be formed. On the other hand, when the pitch containing a small amount of free carbon is heated, the mesophase spheres grow large to be likely to form needle cokes. When the QI content is within the above range, the electrode characteristics are further excellent.

Further, the pitch used in the present invention has a TI (toluene-insoluble) content of preferably not less than 10 % by mass and not more than 70 % by mass. Since the pitch having a small TI content has a small average molecular weight of the polycyclic aromatic compound constituting the pitch and a large amount of a volatile component, the carbonizing rate may be lower, the manufacture cost may increase, and a carbonaceous carbon material containing many pores and having a large specific surface area tends to be obtained. The pitch having a large TI content has a large average molecular weight of the polycyclic aromatic compound constituting the pitch and thus resulting in a large carbonizing rate. However, the pitch having a large TI content has high viscosity, thus, there is a tendency that it is difficult to homogeneously mix with the silicon-containing particles. When the TI content is within the above range, the pitch can be homogeneously mixed with other components, and a composite material that exhibits preferable characteristics as an active material for a battery can be obtained.

The QI content and TI content of the pitch can be measured according to a method described in or a method according to JIS K2452.

An amount of the carbonaceous carbon material (C) is preferably 2 to 40 % by mass, and more preferably 4 to 30 % by mass relative to a total mass of the constituents (A), (b1), (b2) and (C) of the negative electrode active material of the present invention.

In the conventional technology, with the intention of disposing a large volume of voids in the inside of the composite, an aggregate is formed of many fibrous carbon fibers. The fibrous carbon fiber used in a negative electrode generally has a high specific surface area. If it is tried to coat the aggregate made of the fibrous carbon fibers with the carbonaceous carbon material, only a surface of the aggregate is coated with the carbonaceous carbon material, and the carbonaceous carbon material does not sufficiently reach to the voids in the inside.

In the present invention, it is intended not to dispose a large volume of void inside of the floc of the carbon nanotubes by coating a surface of the silicon-containing particles (b2) with the carbonaceous carbon material (C) before dispersing into the inside of the floc of the carbon nanotubes. In the present invention, the carbonaceous carbon material (C) coated on a surface of the silicon-containing particles (b2) mainly contributes to impart the electric conductivity. The carbon nanotubes (b1) in the composite material contributes a little also to impart the electric conductivity but rather has a large function as a buffering agent of expansion/contraction of the silicon-containing particles (b2) during intercalate/deinertcalate of lithium ions, that is, a function of maintaining a shape of the composite material (B).

Different from the conventional technology, the present invention does not intend to make the carbon nanotubes (b1) contact with individual silicon-containing particles (b2). Therefore, in the present invention, the carbon nanotubes (b1) can perform its function at a slight addition amount. Further, since the carbonaceous carbon material (C) is conventionally coated to a surface of the carbon nanotubes (b1) having a high specific surface area, the amount of the carbonaceous carbon material (C) necessary to coat is large and an irreversible capacity increases. However, the present application contributes to improve the capacity retention ratio in a point that also the carbonaceous carbon material (C) can be suppressed to a slight amount.

"Manufacturing Method"

A method for manufacturing a negative electrode active material according to one embodiment of the invention comprises a step of mixing silicon-containing particles (b2) and a carbon precursor (c) to obtain a precursor-coated silicon-containing particles ; a step of subjecting the precursor-coated silicon-containing particles to heat treatment at a temperature equal to or higher than the softening temperature of the carbon precursor (c); a step of disintegrating the heat-treated precursor-coated silicon-containing particles; a step of complexing the disintegrated precursor-coated silicon-containing particles coated and carbon nanotubes (b1) to obtain a composite material (B) ; a step of pulverizing the composite material (B) ; a step of mixing the pulverized composite material (B) and a graphitic carbon material (A) to obtain a mixture; and a step of subjecting the mixture to heat treatment at a temperature equal to or higher than a carbonizing temperature of the carbon precursor (c).

The mixing of the silicon-containing particles (b2) and the carbon precursor (c) is not particularly limited by the method. For example, a blender, a kneader, an extruder, or the like can be used for the mixing. It is preferable to use no solvent when mixing the silicon-containing particles (b2) and the carbon precursor (c). This is because pores are likely to be formed in the carbonaceous carbon material when the solvent is used. The precursor-coated silicon-containing particles are heated at a temperature equal to or higher than the softening temperature of the carbon precursor (c). An upper limit of a temperature in this heat treatment is not particularly limited. However, in order to smoothly proceed the complexing with the graphitic carbon material (A) in the heat treatment for carbonizing that is performed after that, it is preferable to perform the said heat treatment so as to keep the carbon precursor (c) at a state where it can be re-melted. Therefore, the upper limit in the said heat treatment is preferably the softening temperature + 100°C, and more preferably the softening temperature + 50°C. The heat treatment may be performed by holding still or fluidizing the precursor-coated silicon-containing particles in a heating furnace or the like, or may be performed while mixing the silicon-containing particles (b2) and the carbon precursor (c) by a kneader, an extruder or the like. However, when simultaneously performing mixing and heating, in order to improve the uniformity of the material, it is preferable to mix before charging into a heating/mixing apparatus.

The precursor-coated silicon-containing particles may aggregate by the heat treatment. Therefore, the heat-treated precursor-coated silicon-containing particles are disintegrated. Considering the homogeneity and the lithium diffusivity during complexing with the carbon nanotubes (b1), a 50% diameter ($D_{50}$) of the precursor coated silicon-containing particles is preferably 50 $\mu$m or less, more preferably 30 $\mu$m or less and most preferably 10 $\mu$m or less. Preferable examples of the disintegrating method include a pulverizer that makes use of an impact force such as a hammer, a jet mill that makes use of collisions between objects to be disintegrated and the like. In all treatments, it is preferable to conduct the treatment under an inert gas atmosphere so that a component proportion in the material does not change.

Then, the disintegrated precursor-coated silicon-containing particles and the carbon nanotubes (b1) are complexed. A method for complexing is not particularly limited as long as the precursor-coated silicon-containing particles can be dispersedly disposed in the inside of a floc of the carbon nanotubes (b1), and examples thereof include dry mixing and wet mixing. In the dry mixing, for example, a pulverizer that makes use of an impact force such as a hammer, a jet mill that makes use of collisions between objects to be disintegrated or the like can be used. In the wet mixing, for example, an ultrasonic dispersion treatment or a jet mill treatment can be employed. In the wet mixing, the drying is followed. The drying is not particularly limited as long as a liquid medium used can be sufficiently removed. In order to adjust the flocculating degree of the carbon nanotubes (b1) during drying, vacuum drying and the like can be performed as needed.

When the flocculating degree of the carbon nanotubes (b1) is low in the composite material (B), it is preferable to appropriately apply a granulation treatment. As the granulation treatment, dry granulation such as rolling granulation, and wet granulation such atomizing granulation can be used.

In the complexing treatment, an aggregated composite material (b) may be obtained. Therefore, it is preferable to pulverize the composite material (B) obtained by the complexing treatment as needed. Considering the homogeneity and lithium diffusivity during the time of mixing with the graphitic carbon material (A), the 50% diameter ($D_{50}$) of the composite material (B) is preferably 50 $\mu$m or less, more preferably 30 $\mu$m or less, and still most preferably 10 $\mu$m or less. As the pulverizing method, the pulverizer that makes use of an impact force such as a hammer, a jet mill that makes use of collisions between objects to be pulverized or the like can be preferably used. In all treatments, it is preferable to conduct the treatment under an inert gas atmosphere so that a component proportion of the material does not change. In the wet mixing, it is preferable to treat in a nonaqueous solvent such as alcohols or the like.

Next, the graphitic carbon material (A) is mixed with the above-obtained composite material (B), followed by performing a heat treatment. A mixing method and a heat treatment method are not particularly limited. For example, the composite material (B) and the graphitic carbon material (A) are mixed using a blender or the like, followed by performing the heat treatment while leaving to stand still or fluidizing in a heating furnace. The said heat treatment is performed at a temperature equal to or higher than a temperature at which the carbon precursor (c) is carbonized. By carbonizing the carbon precursor (c), the carbonaceous carbon material (C) is formed. Though different depending on the kind of the carbon precursor, the heat treatment temperature is preferably not less than 500°C and less than 1300°C, more preferably not less than 600°C and less than 1300°C, and still more preferably not less than 800°C and less than 1300°C. When the heat treatment temperature is excessively low, the carbonization does not sufficiently complete, hydrogen or oxygen remains in a carbon material layer that covers a surface of the silicon-containing particles, and these may affect on the battery characteristics. By contrast, when the heat treatment temperature is excessively high, the carbon material layer that covers a surface of the silicon-containing particles is excessively crystallized, metal fine particles bind with carbon to be inactive to Li, and the charge/discharge characteristics may be degraded. After the heat treatment, as needed, disintegrating is preferably performed. As the disintegrating method, a pulverizer that makes use of an impact force such as a hammer, a jet mill that makes use of collisions between objects to be disintegrated or the like can be preferably employed. When considering lithium diffusivity, an electrode thickness and the like, the 50% diameter ($D_{50}$) of the negative electrode active material is preferably not more than 50 $\mu$m, and more preferably not more than 30 $\mu$m. In all treatments, it is preferable to conduct the treatment under an inert gas atmosphere so that a component proportion of the material does not change.

(Negative Electrode Paste)

A negative electrode paste according to one embodiment of the present invention comprises the negative electrode active material, a binder, and a solvent, and as needed, a conductive assistant, and the like. The negative electrode paste can be obtained by kneading, for example, the negative electrode active material, the binder, and the solvent, and as needed, the conductive assistant, and the like. The negative electrode paste can be formed into a shape such as a sheet shape or a pellet shape.

Examples of the binders include polyethylene, polypropylene, ethylene-propylene terpolymer, butadiene rubber, styrene butadiene rubber, butyl rubber, acrylic rubber, high molecular compounds with large ionic conductivity, and the like. Examples of high molecular compounds with large ionic conductivity include polyvinylidene fluoride, polyethylene oxide, polyepichlorohydrin, polyphosphazene, polyacrylonitrile, and the like. An amount of the binder is preferably not less than 0.5 part by mass and not more than 100 parts by mass relative to 100 parts by mass of the negative electrode active material.

The conductive assistant is not particularly limited as long as it serves to impart conductivity and electrode stability (buffer action to volume changes in the intercalation and deintercalation of lithium ions) to the electrode. For example, the vapor grown carbon fiber (for example, "VGCF (registered trademark)" manufactured by Showa Denko K.K.), conductive carbon (for example, "Denka Black (registered trademark)" manufactured by Denki Kagaku Kogyo Kabushiki Kaisha, "Super C65" manufactured by TIMCAL Ltd., "Super C45" manufactured by TIMCAL Co., Ltd., "KS6L" manufactured by TIMCAL Co., Ltd.), or the like. An amount of the conductive assistant is preferably not less than 10 parts by mass and not more than 100 parts by mass relative to 100 parts by mass of the negative electrode active material.

The solvent is not particularly limited and N-methyl-2-pyrholidone, dimethyl formamide, isopropanol, water, and the like can be mentioned. In the case of a binder that uses water as the solvent, a thickener is preferably used together. An amount of the solvent is adjusted so that the paste has the viscosity that is easy to coat on a current collector.

(Negative Electrode Sheet)

A negative electrode sheet according to one embodiment of the present invention comprises a current collector and an electrode layer that covers the current collector.

As the current collector, for example, a nickel foil, a copper foil, a nickel mesh or a copper mesh can be mentioned.

The electrode layer comprises a binder and the negative electrode active material. The electrode layer can be obtained by applying and drying, for example, the above mentioned paste. A applying method the paste is not particularly limited. A thickness of the electrode layer is usually 50 to 200 $\mu$m. When the thickness of the electrode layer is excessively large, the negative electrode sheet may be incapable of being housed in a standardized battery container. The thickness of the electrode layer can be adjusted by an application amount of the paste. Further, also by pressure forming after drying the paste, the thickness of the electrode layer can be adjusted. As the pressure forming method, a forming method such as a role pressure method, a plate pressure method can be employed. A pressure in the pressure forming is preferably about 1 to 5 ton/cm$^2$.

An electrode density of the negative electrode sheet can be calculated as shown below. That is, a pressed negative electrode sheet is punched into a disc having a diameter of 16 mm, followed by measuring its weight. Further, a thickness of the electrode is measured. By subtracting a weight and a thickness of the current collector, which were separately measured from the above weight and thickness, a weight and a thickness of the electrode layer can be obtained, and the electrode density is calculated based on these values.

(Lithium Ion Battery)

A lithium ion battery according to one embodiment of the present invention comprises a negative electrode active material for lithium ion secondary batteries according to one embodiment of the present invention. The negative electrode active material for lithium ion secondary batteries is, as described above, usually contained in the negative electrode sheet. Further, the lithium ion battery usually further comprises an electrolyte and a positive electrode sheet.

In the positive electrode sheet used in the present invention, a sheet that comprises a substance conventionally used in the lithium ion battery, specifically, a positive electrode active material can be used. Examples of the positive electrode active materials include $LiNiO_2$, $LiCoO_2$, $LiMn_2O_4$, $LiNi_{0.34}Mn_{0.33}Co_{0.33}O_2$, $LiFePO_4$, and the like.

The electrolyte is preferably at least one selected from the group consisting of nonaqueous electrolytic solutions and nonaqueous polymer electrolytes. The nonaqueous electrolytic solutions and nonaqueous polymer electrolytes used in the lithium ion batteries are not particularly limited. For example, organic electrolytic solutions obtained by dissolving a lithium salt such as $LiClO_4$, $LiPF_6$, $LiAsF_6$, $LiBF_4$, $LiSO_3CF_3$, $CH_3SO_3Li$, $CF_3SO_3Li$, in a nonaqueous solvent such as ethylene carbonate, diethyl carbonate, dimethyl carbonate, ethyl methyl carbonate, propylene carbonate, butylene carbonate, acetonitrile, propylonitrile, dimethoxyethane, tetrahydrofuran, $\gamma$-butyrolactone; gelled polymer electrolytes such as polyethylene oxide, polyacrylonitrile, polyvinylidene fluoride, and polymethyl methacrylate; and solid polymer electrolyte containing polymers with ethylene oxide bond, can be mentioned.

Further, a substance that causes a decomposition reaction during the first charging of the lithium ion battery may be slightly added to the electrolytic solution. As the substance, for example, vinylene carbonate (VC), biphenyl, propane sultone (PS), fluoroethylene carbonate (FEC), ethylene sultone (ES) or the like can be mentioned. An addition amount thereof is preferably not less than 0.01 % by mass and not more than 50 % by mass.

The lithium ion battery of the present invention may comprise a separator placed between the positive electrode sheet and the negative electrode sheet. As the separator, nonwoven fabrics, clothes, microporous films, composed mainly of polyolefin such as polyethylene, polypropylene, or combinations thereof can be mentioned.

In the lithium ion battery of the present invention, a ratio (a capacity ratio between a positive electrode and a negative electrode) of a capacity ($Q_A$) of the negative electrode sheet to a capacity ($Q_C$) of the positive electrode sheet is preferably adjusted to from 1.0 to 1.8. When the capacity of the negative electrode that receives lithium ions is excessively small, excess Li deposits on a negative electrode to cause cycle degradation, by contrast, when the capacity of the negative electrode is excessive, since charge/discharge is performed in a state of low load, while the energy density decreases, the cycle characteristics are improved.

EXAMPLES

Hereinafter, the present invention is specifically described with reference to Examples and Comparative Examples. However, the present invention is not limited to the Examples.

Materials used in the Examples are as follows.

(1) Graphitic Carbon Material (A)

Petroleum coke was pulverized and subjected to a heat treatment at 3000°C in Acheson furnace to obtain a scale-like graphitic carbon material (A) having a 10% particle size ($D_{10}$) of 7.8 $\mu$m, a BET specific surface area of 1.9 m²/g, $d_{002}$ of 0.3359 nm, Lc of 154 nm, a 50% particle size ($D_{50}$) of 22.1 $\mu$m, 90% particle size ($D_{90}$) of 46.1 $\mu$m, and $I_G/I_D$ (G value) of 16.7. The graphitic carbon material (A) had the $S_{OP}$ of 13.4 $\mu$m², and the $A_{OP}$ of 2.14.

(2) Carbon Nanotube (b1)

"VGCF (registered trademark) -X" manufactured by Showa Denko K.K.: fiber diameter 15 nm, aspect ratio 220, Raman R value 1.1, BET specific surface area 260 m²/g, and compression specific resistance (density 1.0 g/cm³) 1.2 $\times$ 10$^{-3}$ $\Omega$·cm.

(3) Silicon-containing Particles (b2)

Si particles having an oxygen content contained in the particles quantified by ICP (Inductive Coupled Plasma) of 5.8 % by mass, a proportion of primary particles having a particle size of not more than 200 nm of not less than 90 % by number, and a diameter $D_{av}$ defined by the following formula of 50 nm.

$$D_{av} = 6 / (\rho \times S_{sa})$$

$D_{av}$: a diameter under the assumption that a particle is a dense sphere
$S_{sa}$: BET specific surface area (m²/g) and
$\rho$: true density of silicon (2.33 g/cm³ as a theoretical value).

(4) Carbon Precursor (c)

Petroleum pitch having an actual carbon ratio at 1100°C measured by a thermal analysis under a nitrogen gas flow of 52 %, the QI content of 0.5 % by mass, the TI content of 50 % by mass, and the softening temperature of 220°C.
In the present Examples, various physical properties were measured according to the following methods.

(Particle Size)

Two microspatulaful of powder and two drops of a nonionic surfactant (TRITON (registered trademark) -X manufactured by Roche Applied Science) were added to 50 ml of water, followed by ultrasonically dispersing for 3 minutes. This dispersion was charged into a laser diffraction particle size analyzer (LMS-2000e, manufactured by Seishin Enterprise Co., Ltd.) and a cumulative particle size distribution on the volume basis was measured.

(Raman G Value)

Using a laser Raman spectrometer (NRS-3100, manufactured by JASCO Co., Ltd.), a measurement was performed under conditions of an excitation wavelength of 532 nm, an entrance slit width of 200 $\mu$m, an exposure time of 15 seconds, the accumulated number of 2 times, and the diffraction grating of 600 lines/mm. From a measured spectrum, a ratio ($I_G/I_D$) of an intensity $I_D$ (derived from amorphous component) of a peak around 1360 cm$^{-1}$ and an intensity $I_G$ (derived from graphite component) of a peak around 1580 cm$^{-1}$ was calculated. This was taken as the G value and used to indicate the degree of the graphitization.

(Raman R Value)

Using a laser Raman spectrometer (NRS-3100, manufactured by JASCO Co., Ltd.), a measurement was performed under conditions of an excitation wavelength of 532 nm, an entrance slit width of 200 $\mu$m, an exposure time of 15 seconds, the accumulated number of 2 times, and the diffraction grating of 600 lines/mm. From a measured spectrum, a ratio ($I_D/I_G$) of an intensity $I_D$ (derived from amorphous component) of a peak around 1360 cm$^{-1}$ and an intensity $I_G$ (derived from graphite component) of a peak around 1580 cm$^{-1}$ was calculated. This was taken as the R value and used to indicate the degree of the crystallization of the carbon nanotubes.

($d_{002}$, $L_c$)

An average interplanar spacing $d_{002}$ of a (002) plane and a magnitude Lc in a crystal c-axis direction were obtained from a 002 diffraction line in a powder x-ray diffraction.

(BET Specific Surface Area [$S_{sa}$])

Using a Surface Area & Pore Size Analyzer/NOVA 4200e manufactured by Quantachrome, a measurement was performed according to a BET multi-point method with a nitrogen gas as a probe under relative pressure of 0.1, 0.2, and 0.3.

(Manufacture of Positive Electrode Sheet)

To obtain a slurry-like positive electrode paste, 90 g of $LiCoO_2$, 5 g of carbon black (manufactured by TIMCAL Ltd.) and 5 g of polyvinylidene fluoride (PVdF) were stirred and mixed, while N-methyl-pyrrolidone was added thereto.
The positive electrode paste was applied on an aluminum foil having a thickness of 20 $\mu$m using a roll coater and dried to obtain a sheet. The sheet was adjusted to the electrode density of 3.6 g/cm$^3$ using a roll press to obtain a positive electrode sheet.

(Manufacture of Negative Electrode Sheet)

As a binder, polyacrylic acid (PAA) and carboxymethylcellulose (CMC) were prepared. A white powder of PAA was dissolved in purified water to obtain a PAA solution. Further, a white powder of CMC was mixed with purified water, and stirred by a stirrer for a whole day and night to obtain a CMC solution.
As a conductive assistant, carbon black and vapor-grown carbon fiber (VGCF (registered trademark) -H, manufactured by Showa Denko K.K.) were prepared, both were mixed at 3:2 (mass ratio) to obtain a mixed conductive assistant.
Ninety parts by mass of the negative electrode active material which were prepared in Examples and Comparative Examples, 5 parts by mass of the mixed conductive assistant, the CMC solution having a solid content of 2.5 parts by mass, and the PAA solution having the solid content of 2.5 parts by mass were mixed, then an appropriate amount of water was added to a mixture to adjust the viscosity, followed by kneading with a planetary centrifugal mixer to obtain a paste for negative electrode.
The negative electrode paste was uniformly applied on a copper foil having a thickness of 20 $\mu$m at a thickness of 150 $\mu$m using a doctor blade, followed by drying with a hot plate, further followed by vacuum drying to obtain a sheet. The sheet was pressed under pressure of 3 ton/cm$^2$ using a uniaxial press to obtain a negative electrode sheet.
With a half-cell having a counter electrode of Li, a discharge amount per mass of the active material was evaluated, and a capacity of the negative electrode was fine-tuned so that a ratio of a capacity ($Q_A$) of the negative electrode sheet to a capacity ($Q_C$) of the positive electrode sheet is 1.2.

(Manufacture of Battery for Evaluation)

The following operations were conducted in a glove box that was maintained in a dry argon gas atmosphere of a dew point of -80°C or less.
The negative electrode sheet and the positive electrode sheet were punched to obtain a negative electrode piece and a positive electrode piece having an area of 20 cm$^2$ respectively. An Al tab was attached to the Al foil in the positive electrode piece and a Ni tab was attached to the Cu foil in the negative electrode piece. A polypropylene microporous film was inserted between the negative electrode piece and the positive electrode piece, the resulting layered body packed into an aluminum-laminated envelope while maintaining the state. Then, an electrolytic solution was charged therein. After that, an inlet of the aluminum-laminated envelope was sealed by heat sealing to obtain a battery for evaluation. As the electrolytic solution, used was a liquid obtained by dissolving vinylene carbonate (VC) at 1 % by mass, fluoroethylene carbonate (FEC) at 30 % by mass and $LiPF_6$ at a concentration of 1 mol/L in a solvent composed of a mixture of ethylene carbonate, ethylmethyl carbonate and diethyl carbonate at a ratio of 3:5:2 by volume.

(Charge/discharge Cycle Test)

(Aging treatment) Charge/discharge was repeated 5 times at a current value of 0.2 C.

Then, the charge/discharge cycle test was conducted according to the following method.

The charge was conducted according to a CC (constant current) mode of upper limit voltage of 4.2 V and current value of 1 C and a CV (constant voltage) mode of a cutoff current of 0.05 C.

The discharge was conducted according to a CC mode of a lower limit voltage of 2.8 V and a current value of 1 C.

One cycle of this charge/discharge was repeated 50 times. An N cycle discharge retention ratio was defined according to the following formula and calculated.

$$
\begin{aligned}
(N\ cycle\ discharge\ retention\ ratio\ (\%)) = \\
(Discharge\ capacity\ at\ the\ time\ of\ N\ cycle) \\
/(Initial\ discharge\ capacity) \times 100
\end{aligned}
$$

Example 1

The silicon-containing particles (b2) and the carbon precursor (c) were mixed for 1 minute by a fiber mixer (MX-X57) under a nitrogen atmosphere so that a mass ratio of the carbonaceous carbon material (C) to the silicon-containing particles (b2) was 1/1. The resulting mixture placed on an alumina boat was subjected to a heat treatment by heating to 250°C at a temperature increase rate of 10°C/min under a nitrogen flow rate of 300 ml/min using a horizontal firing furnace. The heat-treated product was disintegrated for 1 min under a nitrogen atmosphere using a fiber mixer to obtain carbon precursor coated silicon-containing particles.

Next, the carbon precursor coated silicon-containing particles and the carbon nanotubes (b1) were added to ethanol so that a mass ratio of the silicon-containing particles (b2) to the carbon nanotubes (b1) was 1/0.3, and were subjected to a dispersing and complexing treatment for 60 minutes using a ultrasonic homogenizer (UH-50 manufactured by SMT). The treated product was dried in a dryer at 80°C for 12 hours. Then, the dried product was disintegrated under a nitrogen atmosphere for 1 minute using a fiber mixer (MX-X57) to obtain a composite material (B).

The composite material (B) and the graphitic carbon material (A) were mixed under a nitrogen atmosphere for 1 minute using a fiber mixer. The resulting mixture placed on an alumina boat was subjected to a heat treatment by heating to 1100°C at a temperature increase rate of 10°C/min under a nitrogen flow rate of 300 ml/min using a horizontal firing furnace. The carbon precursor (c) in the composite material (B) was converted to the carbonaceous carbon material (C). After that, by disintegrating and sieving with a 45 μm sieve, a negative electrode active material (I) was obtained.

The negative electrode active material (I) comprised 77 % by mass of the graphitic carbon material (A), 3 % by mass of the carbon nanotubes (b1), 10 % by mass of the silicon-containing particles (b2) and 10 % by mass of the carbonaceous carbon material (C) relative to a total mass of the constituents (A), (b1), (b2) and (C) .

A SEM image of the negative electrode active material (I) is shown in FIG. 1. In the negative electrode active material (I), the silicon-containing particles (b2) coated with the carbonaceous carbon material (C) came into contact with a surface of the carbon nanotubes (b1), and the carbon nanotubes (b1) got entangled and came into contact with each other to form a floc. Further, the silicon-containing particles (b2) coated with the carbonaceous carbon material (C) were dispersedly disposed in the inside of the a floc of the carbon nanotubes (b1). A result of the charge/discharge cycle test of the negative electrode active material (I) is shown in Table 2.

Comparative Example 1

A negative electrode active material (II) was prepared in the same manner as in Example 1 except that the carbon nanotubes (b1) were not added.

The negative electrode active material (II) comprised 80 % by mass of the graphitic carbon material (A), 10 % by mass of the silicon-containing particles (b2) and 10 % by mass of the carbonaceous carbon material (C) relative to a total mass of the constituents (A), (b2) and (C). A result of the charge/discharge cycle test of the negative electrode active material (II) is shown in Table 2.

Comparative Example 2

A negative electrode active material (III) was prepared in the same manner as in Example 1 except that the carbon nanotubes (b1) were changed to the vapor-grown carbon fiber (b3) ("VGCF (registered trademark)", manufactured by Showa Denko KK.: fiber diameter 150 nm, aspect ratio 40).

The negative electrode active material (III) comprised 77 % by mass of the graphitic carbon material (A), 3 % by mass of the vapor-grown carbon fiber (b3), 10 % by mass of the silicon-containing particles (b2), and 10 % by mass of the carbonaceous carbon material (C) relative to a total mass of the constituents (A), (b2), (b3) and (C). A result of the charge/discharge cycle test of the negative electrode active material (III) is shown in Table 2.

Comparative Example 3

The silicon-containing particles (b2) and the carbon nanotubes (b1) were added into ethanol so that a mass ratio of the silicon-containing particles (b2) to the carbon nanotubes (b1) was 1/0.3 and were subjected to a dispersing and complexing treatment for 60 minutes using an ultrasonic homogenizer (UH-50 manufactured by SMT). The treated product was dried in a dryer at 80°C for 12 hours. Then, the dried product was disintegrated under a nitrogen atmosphere for 1 minute using a fiber mixer (MX-X57) to obtain a composite material (B').

Next, the composite material (B') and the carbon precursor (c) were mixed for 1 minute by a fiber mixer (MX-X57) under a nitrogen atmosphere so that a mass ratio of the carbonaceous carbon material (C) to the silicon-containing particles (b2) was 1/1. The resulting mixture held on an alumina boat was subjected to a heat treatment by heating to 250°C at a temperature increase rate of 10°C/min under a nitrogen flow rate of 300 ml/min using a horizontal firing furnace. The heat-treated product was disintegrated for 1 minute under a nitrogen atmosphere using a fiber mixer to obtain a composite material (B").

The composite material (B") and the graphitic carbon material (A) were mixed under a nitrogen atmosphere for 1 minute using the fiber mixer. The resulting mixture held on an alumina boat was subjected to a heat treatment by heating to 1100°C at a temperature increase rate of 10°C/min under a nitrogen flow rate of 300 ml/min using a horizontal firing furnace. The carbon precursor (c) in the composite material (B") was converted to the carbonaceous carbon material (C). After that, by disintegrating and sieving with a 45 $\mu$m sieve, a negative electrode active material (IV) was obtained.

The negative electrode active material (IV) comprised 77 % by mass of the graphitic carbon material (A), 3 % by mass of the carbon nanotubes (b1), 10 % by mass of the silicon-containing particles (b2), and 10 % by mass of the carbonaceous carbon material (C) relative to a total mass of the constituents (A), (b1), (b2), and (C). The negative electrode active material (IV) was observed by a SEM but the carbon nanotubes (b1) could not be clearly confirmed in a SEM image. A result of the charge/discharge cycle test of the negative electrode active material (IV) is shown in Table 2.

[Table 2]

Table 2

| | Initial discharge capacity [mAh/g] | 50 cycles-discharge retention ratio [%] |
|---|---|---|
| Ex.1 | 470 | 85.3 |
| Comp.Ex.1 | 480 | 82.2 |
| Comp.Ex.2 | 475 | 82.5 |
| Comp.Ex.3 | 450 | 79.5 |

As shown in Table 2, the negative electrode active material according to the present invention maintains a high initial discharge capacity comparable to that of the negative electrode active materials obtained by Comparative Example 1 irrespective of addition of the carbon nanotubes having a large irreversible capacity. Further, the negative electrode active material according to the present invention has the capacity retention ratio at 50 cycles higher than that of each negative electrode active material obtained by Comparative Examples.

The negative electrode active material (comparative example 3) made by complexing the silicon-containing particles (b2) and the carbon nanotubes (b1) before coating with the carbonaceous carbon material (C) has a low initial discharge capacity. This is assumed that the carbonaceous carbon material (C) does not cover all surfaces of the silicon-containing particles (b2) and, thus, cannot make all the silicon-containing particles (b2) work as the active material.

**Claims**

1. A manufacturing method of a negative electrode active material for a lithium ion secondary battery, comprising the steps of

mixing silicon-containing particles (b2) and a carbon precursor (c) to obtain precursor-coated silicon-containing particles,

subjecting the precursor-coated silicon-containing particles to a heat treatment at a temperature equal to or higher than a softening temperature of the carbon precursor (c),

disintegrating the heat-treated precursor-coated silicon-containing particles,

complexing the disintegrated precursor-coated silicon-containing particles and carbon nanotubes (b1) to obtain a composite material (B),

pulverizing the composite material (B),

mixing the pulverized composite material (B) and a graphitic carbon material (A) to obtain a mixture, and

subjecting the mixture to a heat treatment at a temperature equal to or higher than a carbonizing temperature of the carbon precursor (c) to form a carbonaceous carbon material (C);

the negative electrode active material comprising the graphitic carbon material (A), the composite material (B), and the carbonaceous carbon material (C), wherein

the graphitic carbon material (A) is formed of scale-like particles,

in which a ratio $I_G/I_D$ (G value) of an area ($I_G$) of a peak in the range of 1580 to 1620 $cm^{-1}$ to an area ($I_D$) of a peak in the range of 1300 to 1400 $cm^{-1}$ in a Raman spectroscopic spectrum observed when an edge surface of the particle is measured with a Raman microspectrometer is not less than 5.2 and not more than 100, and an average interplanar spacing ($d_{002}$) of a (002) plane of the particle by X-ray diffraction method is not more than 0.337 nm; and

relationships of $1.5 \leq A_{op} \leq 6$ and $0.2 \times D_{50} \leq (S_{op} \times A_{op})^{1/2} < 2 \times D_{50}$ are satisfied, in which, by observing optical structures in a rectangular visual field of 480 $\mu m \times$ 540 $\mu m$ of a cross-section of a formed body composed of the graphitic carbon material (A) by a polarizing microscope, $S_{op}$ [$\mu m^2$] is an area of an optical structure when an area cumulated from a smaller area side in an area frequency distribution of the optical structure is 60 % of a total area of the optical structure; $A_{op}$ is an aspect ratio of the optical structure when a frequency cumulated from a smaller aspect ratio side in an aspect ratio frequency distribution of the optical structure is 60% of a total frequency of the aspect ratio; and $D_{50}$ [$\mu m$] is a 50% diameter in a cumulative particle size distribution on the volume basis of the graphitic carbon material (A) measured by a laser diffraction method, and the optical structure of the carbon material is almost in a belt shape;

the composite material (B) comprises the carbon nanotubes (b1) and the silicon-containing particles (b2), the silicon-containing particles (b2) being dispersedly disposed in the inside of a floc of the carbon nanotubes (b1), the carbon nanotubes (b1) having an aspect ratio of 100 to 1000, the silicon-containing particles (b2) comprising a surface layer composed of $SiO_x$ (0 < x < 2), and the silicon-containing particles (b2) having an oxygen content of not less than 1 % by mass and not more than 18 % by mass and being not less than 90% by number in a proportion of the silicon-containing particles (b2) having a primary particle size of not more than 200 nm relative to the total number of the silicon-containing particles (b2), and

the carbonaceous carbon material (C) covers at least a part of a surface of the silicon-containing particles (b2).

2. The manufacturing method according to claim 1, wherein a content of the graphitic carbon material (A) is 20 to 96 % by mass, a content of the carbon nanotubes (b1) is 1 to 20 % by mass, a content of the silicon-containing particles (b2) is 1 to 20 % by mass, and a content of the carbonaceous carbon material (C) is 2 to 40 % by mass, relative to a total mass of the constituents (A), (b1), (b2) and (C).

3. The manufacturing method according to claim 1 or 2, wherein, in the mixing the silicon-containing particles (b2) and a carbon precursor (c), no solvent is used.

4. The manufacturing method according to any one of claims 1 to 3, wherein, in the subjecting the precursor-coated silicon-containing particles to a heat treatment, the upper limit of a temperature in the heat treatment is a softening temperature of the carbon precursor (c) + 100°C.

5. The manufacturing method according to any one of claims 1 to 4, wherein the complexing the disintegrated precursor-coated silicon-containing particles and the carbon nanotubes (b1) is performed by wet mixing.

6. The manufacturing method according to any one of claims 1 to 5, wherein, in the subjecting the mixture to a heat treatment, the heat treatment temperature is not less than 500°C and less than 1300°C.

**Patentansprüche**

1. Verfahren zur Herstellung eines aktiven Materials einer negativen Elektrode für eine Lithium-Ionen-Sekundärbatterie, umfassend die Schritte des

Mischens von siliziumhaltigen Partikeln (b2) und eines Kohlenstoffvorläufers (c) unter Bildung von vorläuferbeschichteten siliziumhaltigen Partikeln,

Unterziehens der vorläuferbeschichteten siliziumhaltigen Partikel einer Wärmebehandlung bei einer Temperatur, die gleich ist wie oder höher ist als eine Erweichungstemperatur des Kohlenstoffvorläufers (c),

Zerkleinerns der wärmebehandelten, vorläuferbeschichteten siliziumhaltigen Partikel,

Komplexierens der zerkleinerten, vorläuferbeschichteten siliziumhaltigen Partikel und von Kohlenstoff-Nanoröhrchen (b1) unter Bildung eines Verbundmaterials (B),

Pulverisierens des Verbundmaterials (B),

Mischens des pulverisierten Verbundmaterials (B) und eines graphitischen Kohlenstoffmaterials (A) unter Bildung eines Gemisches und

Unterziehens des Gemischs einer Wärmebehandlung bei einer Temperatur, die gleich ist wie oder höher ist als eine Verkokungstemperatur des Kohlenstoffvorläufers (c) unter Bildung eines kohlenstoffhaltigen Kohlenstoffmaterials (C);

wobei das aktive Material der negativen Elektrode das graphitische Kohlenstoffmaterial (A), das Verbundmaterial (B) und das kohlenstoffhaltige Kohlenstoffmaterial (C) umfasst, wobei

das graphitische Kohlenstoffmaterial (A) aus schuppenartigen Partikeln gebildet ist,

wobei ein Verhältnis $I_G/I_D$ (G-Wert) eines Bereichs ($I_G$) eines Peaks im Bereich von 1580 bis 1620 $cm^{-1}$ zu einem Bereich ($I_D$) eines Peaks im Bereich von 1300 bis 1400 $cm^{-1}$ in einem Ramanspektroskopiespektrum, das beobachtet wird, wenn eine Kantenoberfläche des Partikels mit einem Raman-Mikrospektrometer gemessen wird, nicht weniger als 5,2 und nicht mehr als 100 beträgt, und ein durch Röntgenbeugungsverfahren ermittelter durchschnittlicher interplanarer Abstand (d002) einer (002) Ebene des Partikels nicht mehr als 0,337 nm beträgt; und

die Beziehungen $1,5 \leq A_{op} \leq 6$ und $0,2 \times D50 \leq (S_{op} \times A_{op})^{1/2} < 2 \times D50$ erfüllt sind,

wobei $S_{op}$ [$\mu m^2$] durch Beobachtung optischer Strukturen in einem rechteckigen Gesichtsfeld von 480 $\mu m \times$ 540 $\mu m$ eines Querschnitts eines aus dem graphitischen Kohlenstoffmaterial (A) zusammengesetzten Formkörpers mittels eines Polarisationsmikroskops eine Fläche einer optischen Struktur ist, wenn eine von einer kleineren Flächenseite kumulierte Fläche in einer Flächenhäufigkeitsverteilung der optischen Struktur 60 % einer Gesamtfläche der optischen Struktur ausmacht; $A_{op}$ ein Aspektverhältnis der optischen Struktur ist, wenn eine Frequenz, die von einer kleineren Aspektverhältnisseite in einer Aspektverhältnis-Häufigkeitsverteilung der optischen Struktur kumuliert wird, 60% einer Gesamthäufigkeit des Aspektverhältnisses beträgt; und $D_{50}$ [$\mu m$] ein mit einem Laserbeugungsverfahren gemessener 50%-Durchmesser des graphitischen Kohlenstoffmaterials (A) in einer volumenbasierten kumulativen Partikelgrößenverteilung ist und die optische Struktur des Kohlenstoffmaterials fast in Bandform ist;

das Verbundmaterial (B) die Kohlenstoff-Nanoröhrchen (b1) und die siliziumhaltigen Teilchen (b2) umfasst, wobei die siliziumhaltigen Teilchen (b2) im Inneren einer Schar der Kohlenstoff-Nanoröhrchen (b1) dispergiert angeordnet sind, wobei die Kohlenstoff-Nanoröhrchen (b1) ein Aspektverhältnis von 100 bis 1000 aufweisen, die siliziumhaltigen Teilchen (b2) eine Oberflächenschicht aus $SiO_x$ (0 < x < 2) umfassen und die siliziumhaltigen Partikel (b2) einen Sauerstoffgehalt von nicht weniger als 1 Masse-% und nicht mehr als 18 Masse-% und nicht weniger als 90 Masse-% einen auf die Gesamtzahl der siliziumhaltigen Partikel (b2) bezogenen Anteil der siliziumhaltigen Partikel (b2) mit einer Primärteilchengröße von nicht mehr als 200 nm aufweisen, und

das kohlenstoffhaltige Kohlenstoffmaterial (C) mindestens einen Teil einer Oberfläche der siliziumhaltigen Partikel (b2) bedeckt.

2. Herstellungsverfahren nach Anspruch 1, worin bezogen auf eine Gesamtmasse der Bestandteile (A), (b1), (b2) und (C) ein Gehalt des graphitischen Kohlenstoffmaterials (A) 20 bis 96 Masse-%, ein Gehalt der Kohlenstoff-Nanoröhrchen (b1) 1 bis 20 Masse-%, ein Gehalt der siliziumhaltigen Teilchen (b2) 1 bis 20 Masse-% und ein Gehalt des kohlenstoffhaltigen Kohlenstoffmaterials (C) 2 bis 40 Masse-% beträgt.

3. Herstellungsverfahren nach Anspruch 1 oder 2, worin beim Mischen der siliziumhaltigen Partikel (b2) und eines Kohlenstoffvorläufers (c) kein Lösungsmittel verwendet wird.

4. Herstellungsverfahren nach einem der Ansprüche 1 bis 3, worin beim Unterwerfen der vorläuferbeschichteten siliziumhaltigen Partikel einer Wärmebehandlung die obere Grenze einer Temperatur in der Wärmebehandlung eine Erweichungstemperatur des Kohlenstoffvorläufers (c) + 100°C ist.

5. Herstellungsverfahren nach einem der Ansprüche 1 bis 4, worin das Komplexieren der zerkleinerten, vorläuferbeschichteten siliziumhaltigen Partikel und der Kohlenstoff-Nanoröhrchen (b1) durch Nassmischen durchgeführt wird.

6. Herstellungsverfahren nach einem der Ansprüche 1 bis 5, worin beim Unterwerfen des Gemisches einer Wärmebehandlung die Wärmebehandlungstemperatur nicht weniger als 500°C und weniger als 1300°C beträgt.

**Revendications**

1. Procédé de production d'un matériau actif d'électrode négative pour une batterie rechargeable lithium-ion, comprenant les étapes suivantes:

mélanger des particules contenant du silicium (b2) et un précurseur de carbone (c) pour obtenir des particules contenant du silicium recouvertes de précurseur,

soumettre les particules contenant du silicium recouvertes de précurseur à un traitement thermique à une température égale ou supérieure à une température de ramollissement du précurseur de carbone (c),

désintégrer les particules contenant du silicium recouvertes de précurseur traitées thermiquement,

complexer les particules contenant du silicium recouvertes de précurseur désintégrées et des nanotubes de carbone (b1) pour obtenir un matériau composite (B),

pulvériser le matériau composite (B),

mélanger le matériau composite pulvérisé (B) et un matériau de carbone graphitique (A) pour obtenir un mélange, et

soumettre le mélange à un traitement thermique à une température égale ou supérieure à une température de carbonisation du précurseur de carbone (c) pour former un matériau de carbone charbonneux (C);

le matériau actif d'électrode négative comprenant le matériau de carbone graphitique (A), le matériau composite (B) et le matériau de carbone charbonneux (C), dans lequel

le matériau de carbone graphitique (A) est constitué de particules du type lamellaire,

dans lequel un rapport $I_G/I_D$ (valeur G) entre une région ($I_G$) d'un pic dans la gamme de 1580 cm$^{-1}$ à 1620 cm$^{-1}$ et une région ($I_D$) d'un pic dans la gamme de 1300 cm$^{-1}$ à 1400 cm$^{-1}$ dans un spectre spectroscopique de Raman observé lorsqu'une surface de bord de la particule est mesurée avec un micro-spectromètre de Raman n'est pas inférieur à 5,2 et pas supérieur à 100, et un espacement interplanaire moyen (d002) d'un plan (002) de la particule par un procédé de diffraction de rayons X n'est pas supérieur à 0,337 nm; et

des relations de $1,5 \leq A_{op} \leq 6$ et $0,2 \times D_{50} \leq (S_{op} \times A_{op})^{1/2} < 2 \times D_{50}$ sont satisfaites,

dans lequel, en observant des structures optiques dans un champ de vision rectangulaire de 480 μm x 540 μm d'une section transversale d'un corps formé composé du matériau de carbone graphitique (A) par un microscope de polarisation, $S_{op}$ [μm$^2$] est une surface d'une structure optique lorsqu'une surface cumulée à partir d'un côté de plus petite surface dans une distribution de fréquence de surface de la structure optique est égale à 60 % d'une surface totale de la structure optique;

$A_{op}$ est un rapport d'aspect de la structure optique lorsqu'une fréquence cumulée à partir d'un côté de plus petit rapport d'aspect dans une distribution de fréquence de rapport d'aspect de la structure optique est égale à 60 % d'une fréquence totale du rapport d'aspect; et

$D_{50}$ [μm] est un diamètre à 50 % dans une distribution de taille de particule cumulative sur la base du volume du matériau de carbone graphitique (A) mesuré par un procédé de diffraction au laser, et la structure optique du matériau de carbone est presqu'en forme de ceinture;

le matériau composite (B) comprend les nanotubes de carbone (b1) et les particules contenant du silicium (b2), les particules contenant du silicium (b2) étant disposées de façon dispersée à l'intérieur d'un floc des nanotubes de carbone (b1), les nanotubes de carbone (b1) présentant un rapport d'aspect de 100 à 1000, les particules contenant du silicium (b2) présentant une couche de surface composée de $SiO_x$ (0 < x < 2), et les particules contenant du silicium (b2) présentant une teneur en oxygène non inférieure à 1 % en masse et non supérieure à 18 % en masse et n'étant pas inférieures à 90 % en nombre dans une proportion des particules contenant du silicium (b2) présentant une taille de particule primaire non supérieure à 200 nm par rapport au nombre total de particules contenant du silicium (b2), et

le matériau de carbone charbonneux (C) recouvre au moins une partie d'une surface des particules contenant du silicium (b2).

2. Procédé de production selon la revendication 1, dans lequel une teneur en matériau de carbone graphitique (A) est comprise entre 20 % et 96 % en masse, une teneur en nanotubes de carbone (b1) est comprise entre 1 % et 20 % en masse, une teneur en particules contenant du silicium (b2) est comprise entre 1 % et 20 % en masse, et une teneur en matériau de carbone charbonneux (C) est comprise entre 2 % et 40 % en masse, par rapport à une masse totale des constituants (A), (b1), (b2) et (C).

3. Procédé de production selon la revendication 1 ou 2, dans lequel, lors du mélange des particules contenant du silicium (b2) et d'un précurseur de carbone(c), aucun solvant n'est utilisé.

4. Procédé de production selon l'une quelconque des revendications 1 à 3, dans lequel, lors de la soumission des particules contenant du silicium recouvertes de précurseur à un traitement thermique, la limite supérieure d'une température lors du traitement thermique est une température de ramollissement du précurseur de carbone (c) + 100°C.

5. Procédé de production selon l'une quelconque des revendications 1 à 4, dans lequel la complexation des particules contenant du silicium revêtues de précurseur désintégrées et des nanotubes de carbone (b1) est exécutée par mélange humide.

6. Procédé de production selon l'une quelconque des revendications 1 à 5, dans lequel, lors de la soumission du mélange à un traitement thermique, la température de traitement thermique n'est pas inférieure à 500°C et est inférieure à 1300°C.

[FIG. 1]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3369589 B
- JP 3897709 B
- JP 4809617 B

- WO 2014003135 A
- JP 2008174442 A
- WO 2012000858 A

### Non-patent literature cited in the description

- **INAYOSHI NODA ; MICHIO INAGAKI.** Japan Society for the Promotion of Science. *Japan Society for the Promotion of Science, 117th Committee materials,* 1963, vol. 1
- **INAGAKI MICHIO.** Japan Society for the Promotion of Science. *Japan Society for the Promotion of Science, 117th Committee materials,* 1972, 117-121, C-5

- **MICHIO INAGAKI.** *Carbon,* 1963, 25-34
- Modern Carbon Material Experimental Technology (Analysis part). The Carbon Society of Japan. Sipec Co., Ltd, 2001, 1-8